# EUROPÄISCHE PATENTSCHRIFT

(11) **EP 1 284 897 B1**
(45) Veröffentlichungstag und Bekanntmachung des Hinweises auf die Patenterteilung: **07.01.2004**
(21) Anmeldenummer: 01949233.9
(22) Anmeldetag: 23.05.2001
(51) Int. Cl.: B62D 1/08

(54) **LENKRADVERKLEIDUNG**
STEERING WHEEL COVER
REVETEMENT DE VOLANT DE DIRECTION

(30) Priorität: 24.05.2000 DE 20009877 U
(43) Veröffentlichungstag der Anmeldung: 26.02.2003
(73) Patentinhaber: Takata-Petri AG, 63743 Aschaffenburg (DE)
(72) Erfinder: HUSSY, Karl, 63857 Waldaschaff (DE)
(74) Vertreter: Baumgärtel, Gunnar, Dr.
(86) Internationale Anmeldenummer: PCT/DE2001/002080
(87) Internationale Veröffentlichungsnummer: WO 2001/089908

(56) Entgegenhaltungen:
- EP-A- 0 820 914
- EP-A- 0 849 127
- WO-A-98/33693
- DE-A- 3 035 074
- DE-U- 29 910 997

## Beschreibung

Die Erfindung betrifft eine Lenkradverkleidung zur Verkleidung eines Abschnittes eines Lenkrades nach dem Oberbegriff des Patentanspruches 1.

Eine solche Lenkradverkleidung ist aus der DEU 29 910 997 bekannt.

Es ist bekannt, zur Verkleidung von Abschnitten eines Lenkrades mit einer Lenkradverkleidung zwei Verkleidungsteile zu verwenden, die den Lenkradkörper entlang des zu verkleidenden Lenkradabschnittes ganz oder teilweise umschließen und die über eine Rastverbindung miteinander verbunden sind. Hierbei greift ein Rasthaken des einen Verkleidungsteiles hinter einen Rastabschnitte des anderen Verkleidungsteiles. Um diese Rastverbindung zuverlässig gegen ein Lösen zu sichern, werden die beiden Verkleidungsteile zusätzlich miteinander verklebt, verschraubt oder vernietet bzw. in dieser Weise zusätzlich mit dem Lenkradkörper verbunden. Es sind also neben den eigentlichen Rastelementen noch weitere Verbindungsmittel vorhanden, die eine zuverlässige, dauerhafte Verbindung der Verkleidungsteile sicher stellen sollen.

Der Erfindung liegt die Aufgabe zugrunde, eine Lenkradverkleidung der eingangs genannten Art zu schaffen, die sich durch einen einfachen Aufbau auszeichnet.

Diese Aufgabe wird erfindungsgemäß durch die Schaffung einer Lenkradverkleidung mit den Merkmalen des Patentanspruchs 1 und eines Lenkrads nach Anspruch 20 gelöst.

Die erfindungsgemäße Lösung hat den Vorteil, daß zur Sicherung der Rastverbindung, die das mindestens eine Verkleidungsteil bezüglich des Lenkrades fixiert, kein zusätzliches Befestigungsmittel, wie z. B. eine Schraube, ein Nietoder ein Klebemittel benötigt wird. Die Funktion der Sicherung der Rastverbindung übernimmt vielmehr eine Anschlagfläche, an der sich das Rastelement derart abstützt, daß es sich nicht von dem zugeordneten Rastabschnitt lösen kann.

Das mindestens eine Verkleidungsteil ist vorzugsweise entlang einer ersten Richtung auf den Lenkradkörper aufschiebbar, wobei das Rastelement (z. B. mit einer Rastnase) hinter den Rastabschnitt schnappt und wobei die Anschlagfläche der Rastsicherung eine spätere Bewegung des Rastelementes entgegen der Einschnapprichtung (die zu einem Lösen der Rastverbindung führen würde) blockiert. Die Bewegung der Rastnase beim Einrasten hinter den Rastabschnitt erfolgt dabei z.B. im Wesentlichen senkrecht zu der ersten Richtung, entlang der das Verkleidungsteil bewegt wird, bis das Rastelement hinter den Rastabschnitt schnappt.

In einer bevorzugten Ausführungsform der Erfindung erfolgt die Sicherung der Rastverbindung dadurch, daß die Anschlagfläche der Rastsicherung mit einer dem Rastabschnitt abgewandten äußeren Oberfläche des Rastelementes zusammenwirkt und sich z.B. an diese Oberfläche anlegt, damit das Rastelement nicht von dem Rastabschnitt abgehoben werden kann. Hierbei kann die Rastsicherung das Rastelement an seiner dem Rastabschnitt abgewandten Oberfläche umgreifen.

Die Rastsicherung ist mit Vorteil hakenförmig, z. B. L-förmig ausgebildet, wobei die innere Kontur des Hakens eine das Rastelement umgreifende Anschlagfläche definiert.

Die Rastsicherung ist vorzugsweise zumindest teilweise elastisch ausgebildet, wobei z. B. ein elastisch abspreizbarer Endabschnitt der Rastsicherung eine Anschlagfläche bildet, an der sich das Rastelement abstützt.

Die Rastsicherung ist einstückig an dem dem Verkleidungsteil angeformt, so daß zur Sicherung der Rastverbindung keine zusätzlichen Bauteile benötigt werden.

Um das Einführen des Rastelementes in Richtung auf den Rastabschnitt und hinter den Rastabschnitt zu erleichtern, kann die Rastsicherung eine Einführschräge aufweisen, die in einem spitzen Winkel zu der Richtung verläuft, entlang der das Verkleidungsteil auf den Lenkradkörper schiebbar ist. Eine entsprechende Einführschräge kann alternativ oder zusätzlich auch an dem Rastelement selbst vorgesehen sein.

Auch das Rastelement ist vorzugsweise elastisch ausgebildet, um das Einführen und Einschnappen des Rastelementes hinter den zugeordneten Rastabschnitt zu erleichtern. So kann das Rastelement eine elastisch abspreizbare Rastnase aufweisen, die zur Herstellung der Rastverbindung hinter den Rastabschnitt schnappt.

In einer bevorzugten Weiterbildung der Erfindung umgreift das Rastelement mit zwei winklig, insbesondere senkrecht, zueinander verlaufenden Flächenabschnitten den Rastabschnitt, und die Rastsicherung wirkt mit ihrer Anschlagfläche derart auf das Rastelement ein, daß die beiden winklig zueinander verlaufenden Flächenabschnitte des Rastelementes in Richtung auf den Rastabschnitt beaufschlagt sind. Hierbei kann aber durchaus ein gewisses Spiel zwischen dem Rastabschnitt und dem Rastelement zugelassen sein.

Gemäß einer Variante der Erfindung ist vorgesehen, daß zur Verkleidung eines Abschnittes eines Lenkrades mindestens zwei Verkleidungsteile vorgesehen sind, die den Lenkradkörper entlang des zu verkleidenden Abschnittes umgeben und die über eine Rastverbindung miteinander verbunden sind, wobei ein Rastelement des ersten Verkleidungsteiles einen Rastabschnitt des zweiten Verkleidungsteiles hintergreift, und daß das zweite Verkleidungsteil eine Rastsicherung mit einer Anschlagfläche aufweist, an der sich das Rastelement abstützen kann und die dadurch einem Lösen der Rastverbindung entgegenwirkt.

Hierbei ist es vorteilhaft, wenn die beiden Verkleidungsteile entlang einer ersten Richtung miteinander in Verbindung bringbar sind, wobei das Rastelement hinter den Rastabschnitt schnappt, und daß die Anschlagfläche der Rastsicherung eine Bewegung des Rastelementes entgegen der Einschnapprichtung blockiert.

Die Verkleidungsteile selbst sind vorzugsweise als offene Ringsegmente ausgebildet, wobei die einander zugewandten Enden der beiden Verkleidungsteile jeweils über ein Rastelement und einen zugehörigen Rastabschnitt miteinander verrastet sind.

Nach einer anderen Variante der Erfindung ist das mindestens eine zur Verkleidung eines Abschnittes des Lenkrades vorgesehene Verkleidungsteil über die Rastverbindung unmittelbar mit dem Lenkradkörper verbunden (d.h., der Rastabschnitt ist an dem Verkleidungsteil vorgesehen und das andere Element der Rastverbindung ist dem Lenkradkörper zugeordnet), wobei das Verkleidungsteil eine Rastsicherung mit einer Anschlagfläche aufweist, an der sich das Rastelement abstützen kann und die dadurch einem Lösen der Rastverbindung entgegenwirkt. Diese Erfindungsvariante ist insbesondere dann vorteilhaft, wenn an dem Lenkradkörper nur ein einzelnes Verkleidungsteil über die Rastverbindung befestigt werden soll, z.B. weil ein weiteres Verkleidungsteil bereits in den Lenkradkörper integriert ist, so daß dieser lediglich noch über einen Teil seines Umfanges verkleidet werden muß.

Die erfindungsgemäße Lenkradverkleidung kann insbesondere zur Verkleidung der Speichen eines Lenkrades verwendet werden. Dies gestattet eine sehr einfache Herstellung der Verkleidungsteile durch Spritzgießen, wobei sowohl die Elemente der Rastverbindung selbst als auch die Rastsicherung einstückig an den jeweiligen Verkleidungsteilen angeformt werden können und dennoch das hierfür erforderliche Formwerkzeug ohne weiteres entformt werden kann.

Neben der Verwendung von Kunststoff als Material für die Verkleidungsteile eignen sich z.B. auch Leichmetalle, wie Aluminium oder Magnesium. Die Herstellung der Verkleidungsteile erfolgt dann vorzugsweise durch Druckguß, Feinguß oder Thixospritzgießen.

Ein Lenkrad mit einer Lenkradverkleidung der vorstehend beschriebenen Art, wobei die Lenkradverkleidung insbesondere zur Verkleidung der Speichen dient, ist durch die Merkmale des Patentanspruchs 20 charakterisiert.

Dabei können zusätzlich Mittel zur drehfesten Halterung der Lenkradverkleidung auf dem Lenkradkörper vorgesehen sein, z. B. in Form eines Vorsprunges und einer zugeordneten Aussparung, die ineinander greifen. Der Vorsprung kann in einfacher Weise durch die Rastsicherung des zweiten Verkleidungsteiles gebildet werden, die in eine entsprechende Aussparung des Lenkradkörpers eingreift.

Gleichzeitig wird die Rastsicherung auch stabilisiert, wenn sie sich an dem Lenkradkörper, z. B. an der genannten Aussparung des Lenkradkörpers, abstützt.

Ferner sind mit Vorteil Mittel zur Zentrierung der Lenkradverkleidung auf den Lenkradkörper vorgesehen. Diese können z. B. durch zwischen dem Lenkradkörper und der Lenkradverkleidung angeordnete elastische Stützelemente gebildet werden, über die sich die Lenkradverkleidung an dem Lenkradkörper abstützt. Hierbei wird ausgenutzt, daß die Verkleidungsteile auf ihrer dem Lenkradkörper zugewandten Innenseite gekrümmt sind, wodurch die Zentrierung bewirkt werden kann.

Die Stützelemente sind vorzugsweise einander gegenüberliegend beidseits des Lenkradkörpers angeordnet und können einstückig an dem Lenkradkörper angeformt sein, z. B. als an einer Umschäumung des Lenkradskelettes angeformte Lippen.

Weitere Merkmale und Vorteile der Erfindung werden bei der nachfolgenden Beschreibung eines Ausführungsbeispiels anhand der Figuren deutlich werden.

Es zeigen:
- Figur 1 -: eine Draufsicht auf ein Lenkrad;
- Figur 2 -: einen Schnitt durch eine Speiche des Lenkrades aus Figur 1;
- Figur 3 -: ein Detail aus Figur mit 2 mit einer vergrößerten Darstellung des Abschnittes, in dem zwei Verkleidungsteile der Speiche miteinander verrastet sind.

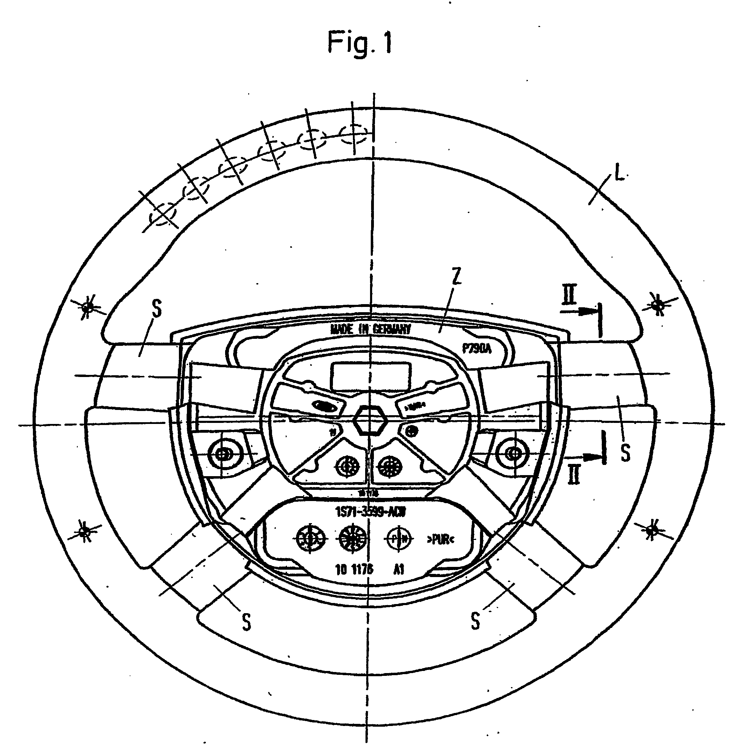

In Figur 1 ist in einer Draufsicht ein Lenkrad dargestellt, das als wesentliche Bestandteile einen zentralen Lenkradbereich Z, Speichen S und einen Lenkradkranz L aufweist.

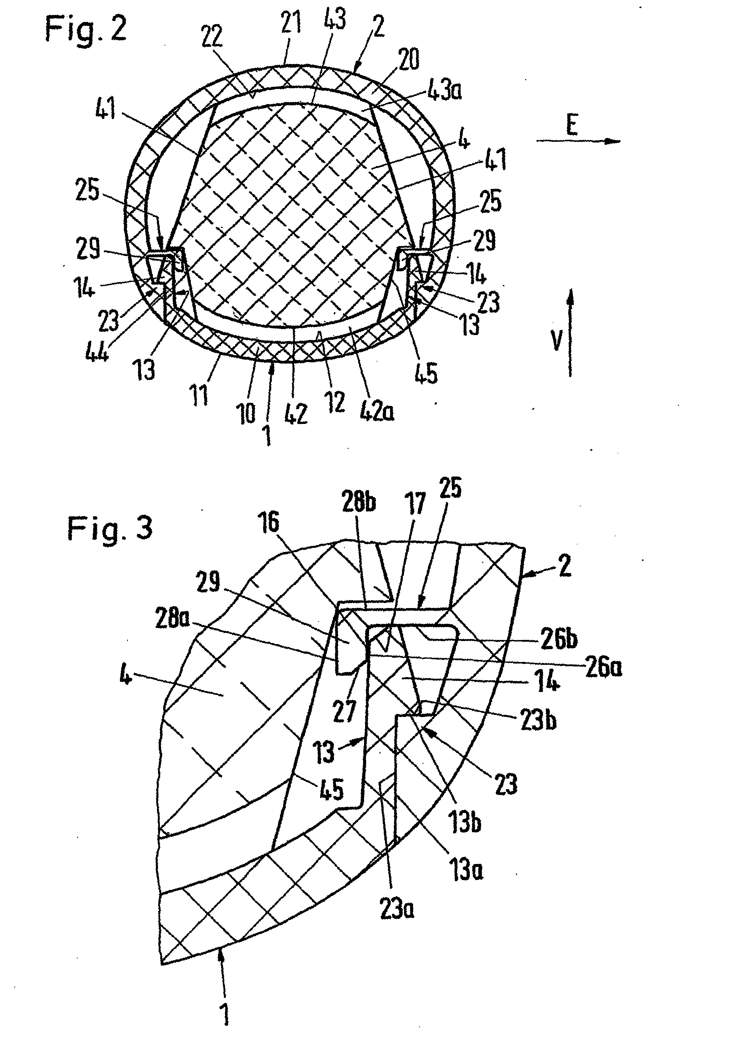

Der zentrale Lenkradbereich Z dient zur Aufnahme einer Vielzahl von Funktionskomponenten, wie z. B. elektrischer Hornkontakten und einer Airbageinheit, die nicht Gegenstand der vorliegenden Erfindung sind. Maßgeblich für die Erfindung ist Vielmehr die Ausgestaltung des Lenkrades im Bereich der Speichen S, die in den Figuren 2 und 3 näher dargestellt ist.

Gemäß Figur 2 ist der Lenkradkörper 4 im Bereich der Speichen von einer Lenkradverkleidung in Form zweier Verkleidungsteile 1, 2 (Dekorschalen) umschlossen, die das Design des Lenkrades im Bereich der Speichen bestimmen. Der Lenkradkörper 4, dessen Struktur in Figur 2 nicht näher dargestellt ist, umfasst überlicherweise eine Skelett bezeichnete innere, tragende Einlage und eine Schaumummantelung, z.B. aus Polyurethan-Schaum.

Die äußere Kontur des Lenkradkörpers 4, die durch dessen Ummantelung bestimmt wird, ist in zwei einander gegenüberliegende Abschnitten 42, 43 jeweils an die zugeordnete innere Kontur 12 bzw. 22 der beiden Verkleidungsteile angepasst. Der Lenkradkörper 4 stützt sich dabei über elastische Elemente 42a, 43a in Form von an den Lenkradkörper 4 einstückig angeformten Lippen an der zugeordneten inneren Kontur 12 bzw. 22 der beiden Verkleidungsteile 1, 2 ab. Die Lippen 42a, 43a sind in ihrer Krümmung und Kontur an die zugehörigen Konturen 12, 42 bzw. 22, 43 des Lenkradkörpers 4 bzw. der Verkleidungsteile 1, 2 angepasst. Hierdurch wird mittels der Lippen 42a, 43a eine Zentrierung der Verkleidungsteile 1, 2 bezüglich des Lenkradkörpers 4 erreicht.

Zwischen den beiden erwähnten, einander gegenüberliegenden und der Zentrierung dienenden Abschnitten 42, 43 verläuft die äußere Kontur des Lenkradkörpers im Wesentlichen geradlinig, wobei in diesem Bereich 41 der äußeren Kontur des Lenkradkörpers 4 zwei einander gegenüberliegenden Aussparungen 44, 45 vorgesehen sind, die die zur Verrastung der beiden Verkleidungsteile 1, 2 vorgesehenen Elemente aufnehmen. Dabei stützt sich jeweils ein als Rastsicherung 25 dienendes Element an der Wand der jeweils zugeordneten Ausnehmung 44 bzw. 45 ab. Hierdurch wird die aus den beiden Verkleidungsteilen 1, 2 bestehende Verkleidung verdrehsicher auf dem Lenkradkörper 4 gehalten.

Die beiden Verkleidungsteile 1, 2 selbst sind jeweils im Wesentlichen C-förmig ausgebildet und über zwei Rastverbindungen 13, 23 miteinander verbunden. Die beiden Rastverbindungen bestehen jeweils aus einem mit einer Rastnase 14 versehenden elastischen Rastelement 13 des ersten Verkleidungsteiles 1 und einem Rastabschnitt 23 des zweiten Verkleidungsteiles 2, der von der Rastnase 14 des jeweiligen Rastelementes 13 hintergriffen wird. Die Rastverbindungen 13, 23 werden durch jeweils eine einstückig an dem zweiten Verkleidungsteil angeformte Rastsicherung 25 gesichert, die mit einem Endabschnitt 29 jeweils ein Rastelement 13 im Bereich seiner Rastnase 14 umgreift. Weitere Einzelheiten zu den Rastverbindungen 13, 23 und der zugeordnete Rastsicherung 25 werden weiter unten anhand Figur 3 erläutert werden.

Die beiden Verkleidungsteile 1, 2 (Dekorschalen), die z. B. aus Kunststoff gespritzt sein können, umschließen im verrasteten Zustand den Lenkradkörper 4 im Bereich der Speichen vollständig und bilden somit eine Speichenverkleidung. Die äußere Kontur 11, 21 der Verkleidungsteile 1, 2 bestimmt das Design der Speichen. Die innere Kontur 12, 22 der Verkleidungsteile ist dagegen vor allem im Hinblick auf die Anbindung an den Lenkradkörper 4 (Zentrierung und Verdrehsicherung) von Bedeutung, wie oben ausgeführt wurde. Zudem sind an die C-förmigen Grundkörper 10, 20 der Verkleidungsteile 1, 2 jeweils diejenigen Elemente nach innen hin einstückig angeformt, die der Verrastung der Verkleidungsteile 1, 2 dienen.

Wie insbesondere anhand der vergrößerten Detaildarstellung gemäß Figur 3 erkennbar ist, ist an jedem der Endabschnitte des zweiten Verkleidungsteiles 2 jeweils ein Rastabschnitt 23 einstückig angeformt, der zwei im Wesentlichen senkrecht zueinander verlaufende Rastflächen 23a, 23b bildet. Der Rastabschnitt 23 wird von der Rastnase 14 eines Rastelementes 13 umgriffen, wobei sich das Rastelement 13 mit zwei im Wesentlichen senkrecht zueinander verlaufenden inneren Flächenabschnitten 13a, 13b an zwei Flächenabschnitte 23a, 23b (Rastfläche) des Rastabschnittes 23 anlegt.

Auf seiner dem Rastabschnitt 23 abgewandten, äußeren Oberfläche wird das Rastelement 13 im Bereich seiner Rastnase 14 von einer Rastsicherung umgriffen, die aus einem senkrecht von dem zweiten Verkleidungsteil nach innern abstehenden Steg und einem senkrecht von diesem Steg abgewinkelten Endabschnitt 29 besteht. Dabei liegt die Rastsicherung mit ihren inneren Flächenabschnitten 26a, 26b, die durch den Steg und den abgewinkelten Endabschnitt 29 gebildet werden, an der äußeren Oberfläche des Rastelementes 13 (ggf. mit etwas Spiel) an. Die inneren Flächenabschnitte 26a, 26b bilden also eine Anschlagfläche für das Rastelement 13.

Die aus zwei im wesentlich senkrecht zueinander verlaufenden Flächenabschnitt 28a, 28b bestehende äußere Oberfläche der Rastsicherung 25 greift derart in die Aussparung 45 des Lenkradkörpers 4 ein, daß durch die Wände der Aussparung 45 die Beweglichkeit (Verformbarkeit) der Rastsicherung 25 begrenzt wird.

Zum Zusammenbau der Lenkradverkleidung werden die beiden Verkleidungsteile 1, 2 entlang einer ersten Richtung V aufeinander zubewegt, wobei sie den Lenkradkörper 4 im Bereich einer Lenkradspeiche zwischen sich einschließen. Sobald bei dieser Relativbewegung der beiden Verkleidungsteile 1, 2 die Enden der Verkleidungsteile 1, 2 miteinander in Kontakt geraten, werden die elastische ausgebildeten Rastelemente 13 etwas nach innen umgelegt. Bei einer weiteren Bewegung in Verschieberichtung V geraten schließlich die Rastelemente 13 mit ihren im Bereich der Rastnasen 14 vorgesehen Einführschrägen 17 in Kontakt mit zugeordneten Einführschrägen 27 der Rastsicherung 25. Die Einführschrägen 17, 27 gleiten derart übereinander, daß zum Einen die Rastsicherungen 25 mit ihren Endabschnitten leicht nach innen abgespreizt werden und gleichzeitig die Rastnasen 14 der Rastelemente 13 in einer Einschnapprichtung E quer zur Verschieberichtung V hinter die Rastabschnitte 23 des zweiten Verkleidungsteiles 2 schnappen können. Hierdurch wird eine Rastverbindung zwischen dem ersten Verkleidungsteil 1 und dem zweiten Verkleidungsteil 2 gebildet.

Die Rastverbindungen 13, 23 werden durch die Rastsicherungen 25 gesichert, die jeweils ein Rastelement 13 im Bereich seiner Rastnase 14 umgreifen und derart an diesem anliegen, daß sie einem Abheben des Rastelementes 13 von der äußeren Oberfläche 23a, 23b des zugeordneten Rastabschnittes 23 entgegenwirken. Die Verformbarkeit der Rastsicherung 25 selbst wird dabei durch die der jeweiligen Rastsicherung 25 zugewandte innere Oberfläche der Aussparungen 44, 45 des Lenkradkörpers 4 begrenzt. Dadurch wird verhindert, daß durch ein Abspreizen der Endabschnitte 29 der Rastsicherungen 25 die Rastelemente 13 freigegeben werden können.

Im Ergebnis lassen sich die durch die Rastsicherungen 25 gesicherten Rastverbindungen 13, 23 zwischen dem ersten und zweiten Verkleidungsteil ohne Verwendung eines Werkzeuges nur durch Zerstörung lösen. Zur Schaffung einer derartigen Verbindung waren hier keine zusätzlichen Verbindungsmittel, wie z. B. Schrauben, Nieten oder Klebemittel erforderlich, sondern es genügen die als Anschlagflächen dienenden inneren Oberflächen 26a, 26b der Rastsicherungen, an denen sich die Rastelemente 13 mit ihren äußeren Oberflächen abstützen.

## Patentansprüche

1. Lenkradverkleidung zur Verkleidung eines Abschnittes eines Lenkrades, mit mindestens einem Verkleidungsteil (2) das den Lenkradkörper entlang des zu verkleidenden Abschnittes umgibt und das über eine Rastverbindung bezüglich des Lenkradkörpers festlegbar ist, wobei zur Herstellung der Rastverbindung ein Rastelement (13) einen zugeordneten Rastabschnitt (23) des Verkleidungsteils (2) hintergreift, und
zusätzlich eine Rastsicherung (25) mit einer Anschlagfläche (26a, 26b) vorgesehen ist, an der sich das Rastelement (13) abstützen kann und die dadurch einem Lösen der Rastverbindung (13, 23) entgegenwirkt, **dadurch gekennzeichnet, daß** die Rastsicherung (25) einstückig an dem Verkleidungsteil (2) angeformt ist.

2. Lenkradverkleidung nach Anspruch 1, **dadurch gekennzeichnet, daß** das mindestens eine Verkleidungsteil (1, 2) entlang einer ersten Richtung (V) auf den Lenkradkörper (4) schiebbar ist, wobei das Rastelement (13) hinter den Rastabschnitt (23) schnappt, und daß die Anschlagfläche (26a, 26b) der Rastsicherung (25) eine Bewegung des Rastelementes (13) entgegen der Einschnapprichtung (E) blockiert.

3. Lenkradverkleidung nach Anspruch 1 oder 2, **dadurch gekennzeichnet, daß** die Anschlagfläche (26a, 26b) mit einer dem Rastabschnitt (23) abgewandten Oberfläche des Rastelementes (13) zusammenwirkt.

4. Lenkradverkleidung nach einem der vorhergehenden Ansprüche, **dadurch gekennzeichnet, daß** die Rastsicherung (25) das Rastelement (13) umgreift.

5. Lenkradverkleidung nach einem der vorhergehenden Ansprüche, **dadurch gekennzeichnet, daß** die Rastsicherung (25) hakenförmig ausgebildet ist.

6. Lenkradverkleidung nach einem der vorhergehenden Ansprüche, **dadurch gekennzeichnet, daß** die Rastsicherung (25) zumindest teilweise elastisch ausgebildet ist.

7. Lenkradverkleidung nach Anspruch 6, **dadurch gekennzeichnet, daß** die Rastsicherung (25) einen elastisch abspreizbaren Endabschnitt (29) aufweist, der zumindest einen Teil der Anschlagfläche (26a, 26b) bildet und der zum Einführen des Rastelementes (13) hinter den Rastabschnitt (23) abgespreizt werden kann.

8. Lenkradverkleidung nach einem der vorhergehenden Ansprüche, **dadurch gekennzeichnet, daß** die Rastsicherung (25) eine Einführschräge (27) aufweist, um das Einführen des Rastelementes (13) hinter den Rastabschnitt (23) zu erleichtern.

9. Lenkradverkleidung nach einem der vorhergehenden Ansprüche, **dadurch gekennzeichnet, daß** das Rastelement (13) eine Einführschräge (17) aufweist, um das Einführen des Rastelementes (13) hinter den Rastabschnitt (23) zu erleichtern.

10. Lenkradverkleidung nach Anspruch 8 und 9, **dadurch gekennzeichnet, daß** die beiden Einführschrägen (17, 27) beim Einführen des Rastelementes (17) hinter den Rastabschnitt (23) aufeinander gleiten.

11. Lenkradverkleidung nach einem der vorhergehenden Ansprüche, **dadurch gekennzeichnet, daß** das Rastelement (13) elastisch ausgebildet ist.

12. Lenkradverkleidung nach einem der vorhergehenden Ansprüche, **dadurch gekennzeichnet, daß** das Rastelement (13) eine Rastnase (14) aufweist, die den Rastabschnitt (23) hintergreift.

13. Lenkradverkleidung nach einem der vorhergehenden Ansprüche, **dadurch gekennzeichnet, daß** das Rastelement (13) mit zwei winklig, insbesondere senkrecht, zueinander verlaufenden Flächenabschnitten (13a, 13b) den Rastabschnitt (23) umgreift.

14. Lenkradverkleidung nach Anspruch 13, **dadurch gekennzeichnet, daß** die Rastsicherung (25) mit ihrer Anschlagfläche (26a, 26b) derart auf das Rastelement (13) einwirkt, daß die beiden winklig zueinander verlaufenden Flächenabschnitte (13a, 13b) in Richtung auf den Rastabschnitt (23) beaufschlagt sind.

15. Lenkradverkleidung nach einem der vorhergehenden Ansprüche, **dadurch gekennzeichnet, daß** zur Verkleidung eines Abschnittes eines Lenkrades mindestens zwei Verkleidungsteile (1, 2) vorgesehen sind, die den Lenkradkörper (4) entlang des zu verkleidenden Abschnittes umgeben und die über eine Rastverbindung (13, 23) miteinander verbunden sind, wobei ein Rastelement (13) des ersten Verkleidungsteiles (1) einen Rastabschnitt (23) des zweiten Verkleidungsteiles (2) hintergreift, und daß das zweite Verkleidungsteil (2) eine Rastsiche- rung (25) mit einer Anschlagfläche (26a, 26b) aufweist, an der sich das Rastelement (13) abstützen kann und die dadurch einem Lösen der Rastverbindung (13, 23) entgegenwirkt.

16. Lenkradverkleidung nach Anspruch 15, **dadurch gekennzeichnet, daß** die beiden Verkleidungsteile (1, 2) entlang einer ersten Richtung (V) miteinander in Verbindung bringbar sind, wobei das Rastelement (13) hinter den Rastabschnitt (23) schnappt, und daß die Anschlagfläche (26a, 26b) der Rastsicherung (25) eine Bewegung des Rastelementes (13) entgegen der Einschnapprichtung (E) blockiert.

17. Lenkradverkleidung nach Anspruch 15 oder 16, **dadurch gekennzeichnet, daß** die beiden Verkleidungsteile (1, 2) mit ihren einander zugewandten Enden aneinander anliegen und dort jeweils miteinander verrastet sind.

18. Lenkradverkleidung nach einem der Ansprüche 1 bis 14, **dadurch gekennzeichnet, daß** das zur Verkleidung eines Abschnittes des Lenkrades vorgesehene Verkleidungsteil über die Rastverbindung unmittelbar mit dem Lenkradkörper (4) verbunden ist und daß das Verkleidungsteil (2) eine Rastsicherung (25) mit einer Anschlagfläche (26a, 26b) aufweist, an der sich das Rastelement abstützen kann und die dadurch einem Lösen der Rastverbindung entgegenwirkt.

19. Lenkradverkleidung nach einem der vorhergehenden Ansprüche 15 bis 17, **dadurch gekennzeichnet, daß** das mindestens eine Verkleidungsteil (1, 2) zur Verkleidung der Speichen (S) eines Lenkrades vorgesehen ist.

20. Lenkrad mit einem Lenkradkörper (4) und einer Lenkradverkleidung nach einem der vorhergehenden Ansprüche.

21. Lenkrad nach Anspruch 20, **dadurch gekennzeichnet, daß** Mittel (25, 44, 45) zur drehfesten Halterung der Lenkradverkleidung auf dem Lenkradkörper (4) vorgesehen sind.

22. Lenkrad nach Anspruch 21, **dadurch gekennzeichnet, daß** die Lenkradverkleidung dadurch drehfest auf dem Lenkradkörper (4) gelagert ist, daß ein Vorsprung in eine Aussparung (44, 45) eingreift.

23. Lenkrad nach einem der Ansprüche 20 bis 22, **dadurch gekennzeichnet, daß** sich die Rastsicherung (25) mit einer dem Rastelement (13) abgewandten Oberfläche (28a, 28b) an dem Lenkradkörper (4) abstützt.

24. Lenkrad nach Anspruch 22 und 23, **dadurch gekennzeichnet, daß** die Rastsicherung (25) in eine Aussparung (44, 45) des Lenkradkörpers (4) eingreift.

25. Lenkrad nach einem der Ansprüche 20 bis 24, **dadurch gekennzeichnet, daß** Mittel (42a, 43a) zur Zentrierung der Lenkradverkleidung auf dem Lenkradkörper (4) vorgesehen sind.

26. Lenkrad nach Anspruch 25, **dadurch gekennzeichnet, daß** die Mittel (42a, 43a) zur Zentrierung durch zwischen dem Lenkradkörper (4) und der Lenkradverkleidung angeordnete Stützelemente gebildet werden, über die sich die Lenkradverkleidung an dem Lenkradkörper (4) abstützt.

27. Lenkrad nach Anspruch 26, **dadurch gekennzeichnet, daß** die Stützelemente (42a, 43a) einander gegenüberliegend beidseits des Lenkradkörpers (4) angeordnet sind.

28. Lenkrad nach Anspruch 26 oder 27, **dadurch gekennzeichnet, daß** die Stützelemente (42a, 43a) an dem Lenkradkörper (4) angeformt sind und insbesondere durch an einer Umschäumung des Lenkradskelettes angeformte Lippen gebildet werden.

## Claims

1. Steering-wheel cover for covering a section of a steering wheel, with at least one covering piece (2) which surrounds the steering wheel body along the section to be covered and which can be fixed relative to the steering wheel body by means of a catch connection, a catch element (13) engaging behind an associated catch segment (23) of the covering piece (2) to produce the catch connection, and a catch lock (25) with a stop face (26a, 26b), on which the catch element (13) can be supported and which thereby counteracts release of the catch connection (13, 23), being additionally provided, **characterized in that** the catch lock (25) is formed integrally on the covering piece (2) .

2. Steering-wheel cover according to Claim 1, **characterized in that** the at least one covering piece (1, 2) can be pushed onto the steering wheel body (4) in a first direction (V), the catch element (13) snapping behind the catch section (23), and **in that** the stop face (26, 26b) of the catch lock (25) blocks movement of the catch element (13) counter to the snap-in direction (E) .

3. Steering-wheel cover according to Claim 1 or 2, **characterized in that** the stop face (26a, 26b) interacts with a surface of the catch element (13) that faces away from the catch section (23).

4. Steering-wheel cover according to any of the preceding claims, **characterized in that** the catch lock (25) engages around the catch element (13).

5. Steering-wheel cover according to any of the preceding claims, **characterized in that** the catch lock (25) is of hook-shaped design.

6. Steering-wheel cover according to any of the preceding claims, **characterized in that** the catch lock (25) is of at least partially elastic design.

7. Steering-wheel cover according to Claim 6, **characterized in that** the catch lock (25) has an end section (29) that can be bent out elastically, forms at least part of the stop face (26a, 26b) and can be bent out to introduce the catch element (13) behind the catch section (23).

8. Steering-wheel cover according to any of the preceding claims, **characterized in that** the catch lock (25) has an insertion bevel (27) to facilitate the introduction of the catch element (13) behind the catch section (23).

9. Steering-wheel cover according to any of the preceding claims, **characterized in that** the catch element (13) has an insertion bevel (17) to facilitate the introduction of the catch element (13) behind the catch section (23).

10. Steering-wheel cover according to Claim 8 and 9, **characterized in that** the two insertion bevels (17, 27) slide on one another as the catch element (17) is introduced behind the catch section (23).

11. Steering-wheel cover according to any of the preceding claims, **characterized in that** the catch element (13) is of elastic design.

12. Steering-wheel cover according to any of the preceding claims, **characterized in that** the catch element (13) has a catch nose (14) that engages behind the catch section (23).

13. Steering-wheel cover according to any of the preceding claims, **characterized in that** the catch element (13) engages around the catch section (23) with two face sections (13a, 13b) extending at an angle, in particular perpendicularly, to one another.

14. Steering-wheel cover according to Claim 13, **characterized in that** the catch lock (25) acts with its stop face (26a, 26b) on the catch element (13) in such a way that the two face sections (13a, 13b) extending at an angle to one another are acted upon in a direction toward the catch section (23).

15. Steering-wheel cover according to any of the preceding claims, **characterized in that** at least two covering pieces (1, 2), which surround the steering wheel body (4) along the section to be covered and are connected to one another by means of a catch connection (13, 23), are provided to cover a section of a steering wheel, a catch element (13) of the first covering piece (1) engaging behind a catch section (23) of the second covering piece (2), and **in that** the second covering piece (2) has a catch lock (25) with a stop face (26a, 26b), on which the catch element (13) can be supported and which thereby counteracts release of the catch connection (13, 23).

16. Steering-wheel cover according to Claim 15, **characterized in that** the two covering pieces (1, 2) can be brought into connection with one another in a first direction (V), the catch element (13) snapping behind the catch section (23), and **in that** the stop face (26a, 26b) of the catch lock (25) blocks a movement of the catch element (13) counter to the snap-in direction (E).

17. Steering-wheel cover according to Claim 15 or 16, **characterized in that** the two covering pieces (1, 2) rest against one another with their mutually facing ends and are in each case interlocked with one another there.

18. Steering-wheel cover according to any of Claims 1 to 14, **characterized in that** the covering piece provided to cover a section of the steering wheel is connected directly to the steering wheel body (4) by the catch connection, and **in that** the covering piece (2) has a catch lock (25) with a stop face (26a, 26b), on which the catch element can be supported and which thereby counteracts release of the catch connection.

19. Steering-wheel cover according to any of preceding Claims 15 to 17, **characterized in that** the at least one covering piece (1, 2) is provided to cover the spokes (S) of a steering wheel.

20. Steering wheel with a steering wheel body (4) and a steering-wheel cover according to any of the preceding claims.

21. Steering wheel according to Claim 20, **characterized in that** means (25, 44, 45) for holding the steering-wheel cover on the steering wheel body (4) in a manner fixed against rotation are provided.

22. Steering wheel according to Claim 21, **characterized in that** the steering-wheel cover is mounted on the steering wheel body (4) in a manner fixed against rotation by the engagement of a projection in a recess (44, 45).

23. Steering wheel according to any of Claims 20 to 22, **characterized in that** the catch lock (25) is supported on the steering wheel body (4) by a surface (28a, 28b) that faces away from the catch element (13).

24. Steering wheel according to Claims 22 and 23, **characterized in that** the catch lock (25) engages in a recess (44, 45) of the steering wheel body (4).

25. Steering wheel according to any of Claims 20 to 24, **characterized in that** means (42a, 43a) for centring the steering-wheel cover on the steering wheel body (4) are provided.

26. Steering wheel according to Claim 25, **characterized in that** the means (42a, 43a) for centring are formed by supporting elements, which are arranged between the steering wheel body (4) and the steering-wheel cover and via which the steering-wheel cover is supported on the steering wheel body (4).

27. Steering wheel according to Claim 26, **characterized in that** the supporting elements (42a, 43a) are arranged opposite one another on both sides of the steering wheel body (4).

28. Steering wheel according to Claim 26 or 27, **characterized in that** the supporting elements (42a, 43a) are formed on the steering wheel body (4) and, in particular, are formed by lips formed on a casing foamed around the steering wheel skeleton.

## Revendications

1. Revêtement de volant de direction pour le revêtement d'une partie d'un volant, avec au moins une partie de revêtement (2) qui entoure le corps du volant le long de la partie à revêtir et qui peut être fixé au moyen d'une liaison par encliquetage en ce qui concerne le corps du volant, liaison par encliquetage pour la réalisation de laquelle un élément d'encliquetage (13) saisit par l'arrière une partie d'encliquetage correspondante (23) de la partie de revêtement (2) et en supplément est prévue une sécurité d'encliquetage (25) avec une surface de butée (26a, 26b), sur laquelle l'élément d'encliquetage (13) peut s'appuyer et qui agit ainsi dans le sens contraire à un détachement de la liaison d'encliquetage (13, 23), **caractérisé en ce que** la sécurité d'encliquetage (25) est formée d'une seule pièce sur la partie de revêtement (2).

2. Revêtement de volant selon la revendication 1, **caractérisé en ce que** la au moins une partie de revêtement (1, 2) peut coulisser le long d'une première direction (V) sur le corps du volant (4), l'élément d'encliquetage (13) s'enclenchant derrière la partie d'encliquetage (23), et **en ce que** la surface de butée (26a, 26b) de la sécurité d'encliquetage (25) bloque un mouvement de l'élément d'encliquetage (13) dans le sens contraire au sens d'enclenchement (E).

3. Revêtement de volant selon la revendication 1 ou 2, **caractérisé en ce que** la surface de butée (26a, 26b) coopère avec une surface, opposée à la partie d'encliquetage (23), de l'élément d'encliquetage (13).

4. Revêtement de volant selon l'une des revendications précédentes, **caractérisé en ce que** la sécurité d'encliquetage (25) entoure l'élément d'encliquetage (13).

5. Revêtement de volant selon l'une des revendications précédentes, **caractérisé en ce que** la sécurité d'encliquetage (25) est conçue en forme de crochet.

6. Revêtement de volant selon l'une des revendications précédentes, **caractérisé en ce que** la sécurité d'encliquetage (25) est conçue au moins partiellement de façon élastique.

7. Revêtement de volant selon la revendication 6, **caractérisé en ce que** la sécurité d'encliquetage (25) présente une partie d'extrémité (29) pouvant être écartée de façon élastique, qui forme au moins une partie de la surface de butée (26a, 26b) et qui peut être écartée pour l'introduction de l'élément d'encliquetage (13) derrière la partie d'encliquetage (23).

8. Revêtement de volant selon l'une des revendications précédentes, **caractérisé en ce que** la sécurité d'encliquetage (25) présente un chanfrein d'introduction (27) afin de faciliter l'introduction de l'élément d'encliquetage (13) derrière la partie d'encliquetage (23).

9. Revêtement de volant selon l'une des revendications précédentes, **caractérisé en ce que** l'élément d'encliquetage (13) présente un chanfrein d'introduction (17) pour faciliter l'introduction de l'élément d'encliquetage (13) derrière la partie d'encliquetage (23).

10. Habillage de volant selon la revendication 8 et 9, **caractérisé en ce que** les deux chanfreins d'introduction (17, 27) glissent l'un sur l'autre lors de l'introduction de l'élément d'encliquetage (17) derrière la partie d'encliquetage (23).

11. Habillage de volant selon l'une des revendications précédentes, **caractérisé en ce que** l'élément d'encliquetage (13) est conçu de façon élastique.

12. Habillage de volant selon l'une des revendications précédentes, **caractérisé en ce que** l'élément d'encliquetage (13) présente un ergot d'encliquetage (14) qui saisit par l'arrière la partie d'encliquetage (23).

13. Habillage de volant selon l'une des revendications précédentes, **caractérisé en ce que** l'élément d'encliquetage (13) entoure la partie d'encliquetage (23) avec deux parties de surface (13a, 13b) disposées l'une par rapport à l'autre en formant un angle, en particulier un angle droit.

14. Revêtement de volant selon la revendication 13, **caractérisé en ce que** la sécurité d'encliquetage (25) agit avec sa surface de butée (26a, 26b) sur l'élément d'encliquetage (13) de telle sorte que les deux parties de surface (13a, 13b) disposées l'une par rapport à l'autre en formant un angle sont sollicitées en direction de la partie d'encliquetage (23).

15. Revêtement de volant selon l'une des revendications précédentes, **caractérisé en ce que**, pour le revêtement d'une partie d'un volant, il est prévu au moins deux parties de revêtement (1, 2) qui entourent le corps du volant (4) le long de la partie à revêtir et qui sont reliées entre elles au moyen d'une liaison d'encliquetage (13, 23), un élément d'encliquetage (13) de la première partie de revêtement (1) saisissant par l'arrière une partie d'encliquetage (23) de la seconde partie de revêtement (2), et **en ce que** la seconde partie de revêtement (2) présente une sécurité d'encliquetage (25) avec une surface de butée (26a, 26b), sur laquelle l'élément d'encliquetage (13) peut s'appuyer et qui agit ainsi dans le sens contraire à un détachement de la liaison d'encliquetage (13, 23).

16. Revêtement de volant selon la revendication 15, **caractérisé en ce que** les deux parties de revêtement (1, 2) peuvent être amenées en liaison l'une avec l'autre le long d'une première direction (5), l'élément d'encliquetage (13) s'emboîtant derrière la partie d'encliquetage (23), et **en ce que** la surface de butée (26a, 26b) de la sécurité d'encliquetage (25) bloque un mouvement de l'élément d'encliquetage (13) dans le sens contraire au sens d'emboîtement (E).

17. Habillage de volant selon la revendication 15 ou 16, **caractérisé en ce que** les deux parties de revêtement (1, 2) s'appuient l'une sur l'autre avec leurs extrémités tournées l'une vers l'autre et sont encliquetées respectivement l'une avec l'autre à cet endroit.

18. Revêtement de volant selon l'une des revendications 1 à 14, **caractérisé en ce que** la partie de revêtement prévue pour le revêtement d'une partie du volant est reliée directement au corps du volant (4) par la liaison d'encliquetage et **en ce que** la partie de revêtement (2) présente une sécurité d'encliquetage (25) avec une surface de butée (26a, 26b) sur laquelle l'élément d'encliquetage peut s'appuyer et qui s'oppose de ce fait à un détachement de la liaison d'encliquetage.

19. Revêtement de volant selon l'une des revendications précédentes 15 à 17, **caractérisé en ce que** la au moins une partie de revêtement (1, 2) est prévue pour le revêtement des rayons (S) d'un volant.

20. Volant avec un corps de volant (4) et un habillage de volant selon l'une des revendications précédentes.

21. Volant selon la revendication 20, **caractérisé en ce que** des moyens (25, 44, 45) sont prévus pour maintenir solidairement en rotation le revêtement de volant sur le corps de volant (4).

22. Volant selon la revendication 21, **caractérisé en ce que** le revêtement de volant repose de façon solidaire en rotation sur le corps de volant (4) par le fait qu'une saillie s'engage dans un évidement (44, 45).

23. Volant selon l'une des revendications 20 à 22, **caractérisé en ce que** la sécurité d'encliquetage (25) s'appuie avec une surface (28a, 28b) opposée à l'élément d'encliquetage (13) sur le corps de volant (4).

24. Volant selon la revendication 22 et 23, **caractérisé en ce que** la sécurité d'encliquetage (25) s'engage dans un évidement (44, 45) du corps de volant (4).

25. Volant selon l'une des revendications 20 à 24, **caractérisé en ce que** des moyens (42a, 43a) pour le centrage du revêtement de volant sont prévus sur le corps de volant (4).

26. Volant selon la revendication 25, **caractérisé en ce que** les moyens (42a, 43a) pour le centrage sont formés par des éléments d'appui disposés entre le corps de volant (4) et l'habillage de volant et par lesquels l'habillage de volant s'appuie sur le corps de volant (4).

27. Volant selon la revendication 26, **caractérisé en ce que** les éléments d'appui (42a, 43a) sont disposés les uns en face des autres des deux côtés du corps de volant (4).

28. Volant selon la revendication 26 ou 27, **caractérisé en ce que** les éléments d'appui (42a, 43a) sont formés sur le corps de volant et sont constitués en particulier par des lèvres formées sur une partie moussée de l'ossature du volant.
